# EUROPEAN PATENT APPLICATION

(11) **EP 4 656 873 A1**
(43) Date of publication of application: **03.12.2025**
(21) Application number: 24382566.8
(22) Date of filing: 28.05.2024
(51) Int. Cl.: F03D 1/06, F03D 7/02

(54) **METHOD AND COMPUTER PROGRAM FOR MAXIMIZING THE POWER GENERATED BY A WIND TURBINE**

(71) Applicant: Universitat Politècnica De Catalunya, 08034 Barcelona (ES)
(72) Inventor: BERGADÀ GRANYÓ, Josep Maria, 08224 Terrassa (ES); GONZÁLEZ HORCAS, Sergio, 08224 Terrassa (ES); ROJAS GREGORIO, José Ignacio, 08860 Castelldefels (ES); DE VILLARDI DE MONTLAUR, Adeline, 08860 Castelldefels (ES); ALTMEYER, Sebastian Andreas, 08860 Castelldefels (ES); ARIAS CALDERÓN, Santiago, 08860 Castelldefels (ES); NABHANI, Ahmad, 08224 Terrassa (ES); COMA COMPANY, Martí, 08224 Terrassa (ES)
(74) Representative: Torner, Juncosa I Associats, SL

(57) **Abstract**

A method and computer program for maximizing the power generated by a wind turbine are provided. The method comprises dividing a length of each turbine blade into different airfoils; obtaining a boundary layer separation point, a vortex shedding frequency and an amplitude of the dynamic lift and drag forces for each airfoil by analyzing the flow around each airfoil considering a wind speed, a turning speed and an angle of attack; implementing Active Flow Control (AFC) technology on each airfoil; performing, for each airfoil, wind speed and angle of attack, an AFC optimization process, through a parametric optimization or using an optimizer implementing an optimization algorithm, using the obtained boundary layer separation point and vortex shedding frequency, the AFC optimization process comprising obtaining different AFC parameters including a groove location, a groove width, a momentum coefficient, an inclination angle and a pulsating flow frequency; and integrating the different parameters along the turbine blade.

## Description

### TECHNICAL FIELD

The present invention generally relates to optimization methods for wind turbines. Particularly, the invention relates to a method and computer program for maximizing the power generated by a wind turbine, particularly horizontal axis wind turbines (HAWT).

### BACKGROUND OF THE INVENTION

In recent years, the number of installed large-scale horizontal axis wind turbines (HAWT) is rapidly growing around the world. These modern large-scale wind turbines are affected by the unsteady characteristics of the wind turbine operating environment such as turbulence, atmosphere stability, gusts, misaligned yaw of the rotor, wind shear, tower shadow, and upwind wakes, all these phenomena will cause the local inflow angle on the rotor blades to change periodically or suddenly. As a result, several airfoils may operate under stall conditions, resulting in boundary layer separation, drag increase and loss of lift and ultimately the deterioration of the airfoils aerodynamic performance and a reduction of wind turbine power output.

Flow control can reduce such unfavorable behavior by delaying the boundary layer separation. Flow control techniques can generally be categorized as passive and active. Passive flow control techniques do not require input energy and usually utilize geometrical modifications like changing the shape of turbine airfoils via implementing Gurney flaps [2-5] or vortex generators [1, 6-8] for example, but their performance is optimal only at design conditions. Wind turbine blades must face a variety of flow conditions during operation, thus it is doubtful whether such control strategies can have a positive effect under all operating conditions. In contrast, Active flow control (AFC) techniques (requiring power input) remove the drawback associated with passive control at off-design conditions [9-11]. This form of control has been associated mainly with adding/subtracting momentum to/from the mean velocity in particular locations in order to interact with the boundary layer and delay/promote its separation, synthetic jet actuators (SJA) [11-15] or direct-barrier-discharge plasma actuators (DBD-PA) [16-18], are two of the main devices used in AFC implementations. Further information on flow control actuators can be found in review articles by Cattafesta and Steplak [19], Johnson et al [40] and Barlas and Vonkaila [21].

Among the different AFC techniques, synthetic jet actuators (SJA) have the advantage of generating pulsating flow which combines suction and blowing phases, and they can have associated large momentum coefficients. Their high pulsating velocity, fast time response, low power consumption and easiness of integration to the surface of the body, enables their practical use and maximizes the possible aerodynamic gains. Due to the fact that SJ's control is a mature flow control technique of AFC, which is well established and has achieved good results in the field of aeronautics, it is logic to think that their application can be expanded as an effective means to control flow separation on HAWT blades. The application and influence of SJA-AFC on the aerodynamic performance of rotating blades of wind turbines cannot be traced until almost the last decade. Stalnov et al. [22] and Maldonado et al. [23, 24] were among the first researchers to illustrate experimentally the influence of SJA on the aerodynamic performance of HAWTs.

Stalnov et al. [22] experimentally investigated the performance of SJ based-controlled blades on a modified IAI pr8-SE profile at Reynolds numbers ranging between 2 × 10⁵ ≤ Re ≤ 8 × 10⁵ using a Hot-wire sensor. They demonstrated an increase of the overall efficiency of about 5-15%. In Maldonado et al. [23, 24], they initially applied SJs to an S809 airfoil in order to control the unsteady loading for a non-rotating and fixed-pitch wind turbine blade. They used 14 SJ's in total, distributed in three locations, near the root, around the middle, and at the blade tip. A set of Reynolds numbers ranging between 7.1 × 10⁴, and 2.38 × 10⁵ were considered, the momentum coefficient range employed was between Cµ = 1.34 × 10⁻³ and Cµ = 5.97 × 10⁻³.

In the research undertaken by Taylor et al. [25], they studied experimentally a WT blade using an S809 airfoil across the entire blade. They incorporated two arrays of 12 SJ's placed along the blade and at the normalized chord locations of x/C = 0.1 and x/C = 0.2, measured from the leading edge. A lift to drag ratio hysteresis reduction of around 73% and a significant reduction in flow separation near the leading edge, was found in the numerical simulations performed by Tran et al. [26] on the NREL VI turbine with the S809 airfoil shape at Re = 1 × 10⁶ and Cµ = 0.003 when the blade was undergoing pitching. To investigate the effect of the SJ on the delay of the boundary layer separation and its associated vortical structures, WT studies performed by Rice et al. [27] using stereo Particle Image Velocimetry (PIV) and employing the S817 airfoil type were conducted at Re = 3.75 × 10⁵, the SJ was placed at x/C = 0.35, being the momentum coefficient Cµ = 0.012. When AFC was applied, they observed a significant reduction in the hysteresis of the lift and pitching moment coefficient of 41% and 85%, respectively. A numerical study was conducted by Moshfeghi and Hur [28] on a wind turbine blade 5809 HAWT model for a range of AoA between 0° and 25° at Re = 1 × 10⁶ under the excitation control of a SJ located at the chordwise location of x/C = 0.75. Three different SJ injection angles of 5°, 15° and 25° were considered.

Maldonado and Gupta [29], experimentally investigated at Re = 1 × 10⁶ the performance of a real 3-bladed rotor based on the S809 airfoil model, they considered five turning speeds, 250, 500, 750, 1000 and 1250rpm, the pitching angles evaluated were 0°, 3°, and 6°. They placed 20 SJ actuators along each blade radius and they used laser Doppler Anemometry (LDA) to analyze the flow performance at the SJ's exit. For an angular velocity of 500rpm and a pitch angle of 3°, the actuation of 20 SJs per blade decreased the power input to drive the rotor by 10.6%, the rotor efficiency increased by 28%.

Troshin and Seifert [30] studied experimentally at Reynolds numbers ranging from Re = 4 × 10⁵ to 5 × 10⁵, the performance of a thick airfoil AH93-W-300 model typically used at the root section of wind turbines. Three rows of synthetic jets consisting of 13 actuators in each row were considered, the momentum coefficients applied to each SJ were varied from zero (baseline case) to 0.024. A closed-loop control system was used to determine momentum coefficient applied at each instant, the feedback loop was based on the information provided by the pressure sensors and hot-film sensors placed on the airfoil upper surface. A significant increase in net-energy generated by the wind turbine, up to 60% when compared with the non-actuated performance, was obtained over a wide range of AoA and Reynolds numbers. Wu et al. [31] conducted a numerical study on an elliptic cross-section airfoil at Re = 1100, they placed a pair of SJs on the upper and lower surfaces and considered the combined effect of pitching and plunging motion. The effect of different parameters such as jet inclination, jet location and the phase angle between the jet and pitching motion on the energy production capability were analyzed. They observed an increase of up to 30% in energy harvesting along with a significant increase in lift force. The S809 profile employed in a small HAWT and considering suction to delay the boundary layer separation was studied by [32, 33]. In the former research the suction groove was located at 0.15C versus the leading edge, four different wind speeds of 7, 10, 13 and 20m/s and 12 different momentum coefficients for each wind speed were considered. Improvements were particularly relevant at low radius sections, where large boundary layer separation exists. The power capability of the HAWT raised with the wind speed, obtaining an increase versus the base case of 225.56% for a wind speed of 20m/s. The effectiveness of using a single suction slot or two suctions slots combined with a blowing one was analyzed in [33]. Slots were located at 0.1C and 0.5C for the dual case, just the former one was used for the single case. Two momentum coefficients were considered and they observed that when using the larger momentum coefficient and the dual suction configuration, the net power output had a maximum increase. Due to its high performance and efficiency, the SD7003 airfoil has been particularly investigated to be employed in small HAWT's and VAWT's, since they operate at relatively low Reynolds numbers Re ≈ 6 × 10⁴, [34-37]. One of the most comprehensive numerical studies to investigate the performance of SJs on this particular airfoil and Reynolds number was undertaken by Tousi et al. [11, 12]. They optimized at four angles of attack (AoA) 4°, 6°, 8°, and 14° and using an in-house Genetic Algorithms optimizer, the five AFC parameters: jet position, jet with, momentum coefficient, frequency, and jet injection angle. They observed that aerodynamic efficiency could be increased by 251% at AoA = 14° while a 39% increase was obtained at AoA = 8°. In fact, in the present research the same optimizer and optimization process is employed to obtain the five optimum AFC parameters for different airfoils cut along the DTU-10MW-RWT.

Based on the existing literature it can be concluded that research on aerodynamic performance of HAWTs with SJs control has been generally done without a previous analysis of the boundary layer separation and its associated frequency.

New methods for maximizing the power generated by a wind turbine are therefore needed, specifically to enable the obtention of the boundary layer separation location and associated frequency for each airfoil.

### References:

[1] C. Zhu, Y. Qiu, Y. Feng, T. Wang, and H. Li, "Combined effect of passive vortex generators and leading-edge roughness on dynamic stall of the wind turbine airfoil," Energy Conversion and Management, vol. 251, p. 115015, 2022.
[2] W. L. Zhao and X. L. Zheng, "Numerical simulation on the flow control by mounting indented gurney flaps for a wind turbine," Advanced Materials Research, vol. 512, pp. 623-627, 2012.
[3] B. L. Storms and C. S. Jang, "Lift enhancement of an airfoil using a gurney flap and vortex generators," Journal of Aircraft, vol. 31, no. 3, pp. 542-547, 1994.
[4] D. Baldacchino, C. Ferreira, D. D. Tavernier, W. Timmer, and G. Van Bussel, "Experimental parameter study for passive vortex generators on a 30% thick airfoil," Wind Energy, vol. 21, no. 9, pp. 745-765, 2018.
[5] J. Wang, Y. Li, and K.-S. Choi, "Gurney flap-lift enhancement, mechanisms and applications," Progress in Aerospace sciences, vol. 44, no. 1, pp. 22-47, 2008.
[6] M. Kerho, S. Hutcherson, R. Blackwelder, and R. Liebeck, "Vortex generators used to control laminar separation bubbles," Journal of aircraft, vol. 30, no. 3, pp. 315-319, 1993.
[7] A. Abbas, J. De Vicente, and E. Valero, "Aerodynamic technologies to improve aircraft performance," Aerospace science and technology, vol. 28, no. 1, pp. 100-132, 2013.
[8] J. C. Lin, "Review of research on low-profile vortex generators to control boundary-layer separation," Progress in aerospace sciences, vol. 38, no. 4-5, pp. 389-420, 2002.
[9] G. Jones, M. Santer, and G. Papadakis, "Control of low reynolds number flow around an airfoil using periodic surface morphing: A numerical study," Journal of Fluids and Structures, vol. 76, pp. 95-115, 2018.
[10] A. Rezaeiha, H. Montazeri, and B. Blocken, "Active flow control for power enhancement of vertical axis wind turbines: Leading-edge slot suction," Energy, vol. 189, p. 116131, 2019.
[11] N. Tousi, M. Coma, J. Bergad'a, J. Pons-Prats, F. Mellibovsky, and G. Bugeda, "Active flow control optimization on sd7003 airfoil at pre and post-stall angles of attack using synthetic jets," Applied Mathematical Modelling, vol. 98, pp. 435-464, 2021.
[12] N. Tousi, J. Bergad'a, and F. Mellibovsky, "Large eddy simulation of optimal synthetic jet actuation on a sd7003 airfoil in post-stall conditions," Aerospace Science and Technology, p. 107679, 2022.
[13] M. Amitay, D. R. Smith, V. Kibens, D. E. Parekh, and A. Glezer, "Aerodynamic flow control over an unconventional airfoil using synthetic jet actuators," AIAA journal, vol. 39, no. 3, pp. 361-370, 2001.
[14] N. Buchmann, C. Atkinson, and J. Soria, "Influence of znmf jet flow control on the spatiotemporal flow structure over a naca-0015 airfoil," Experiments in fluids, vol. 54, pp. 1-14, 2013.
[15] W. Zhang and R. Samtaney, "A direct numerical simulation investigation of the synthetic jet frequency effects on separation control of low-re flow past an airfoil," Physics of Fluids, vol. 27, no. 5, 2015.
[16] J.-J. Wang, K.-S. Choi, L.-H. Feng, T. N. Jukes, and R. D. Whalley, "Recent developments in dbd plasma flow control," Progress in Aerospace Sciences, vol. 62, pp. 52-78, 2013.
[17] M. Sato, T. Nonomura, K. Okada, K. Asada, H. Aono, A. Yakeno, Y. Abe, and K. Fujii, "Mechanisms for laminar separated-flow control using dielectric-barrier-discharge plasma actuator at low reynolds number," Physics of Fluids, vol. 27, no. 11, 2015.
[18] M. G. De Giorgi, A. Ficarella, F. Marra, and E. Pescini, "Micro dbd plasma actuators for flow separation control on a low pressure turbine at high altitude flight operating conditions of aircraft engines," Applied Thermal Engineering, vol. 114, pp. 511-522, 2017.
[19] L. N. Cattafesta III and M. Sheplak, "Actuators for active flow control," Annual Review of Fluid Mechanics, vol. 43, pp. 247-272, 2011.
[20] S. J. Johnson, J. P. Baker, C. Van Dam, and D. Berg, "An overview of active load control techniques for wind turbines with an emphasis on microtabs," Wind Energy: An International Journal for Progress and Applications in Wind Power Conversion Technology, vol. 13, no. 2-3, pp. 239-253, 2010.
[21] T. K. Barlas and G. A. van Kuik, "Review of state of the art in smart rotor control research for wind turbines," Progress in Aerospace Sciences, vol. 46, no. 1, pp. 1-27, 2010.
[22] O. Stalnov, A. Kribus, and A. Seifert, "Evaluation of active flow control applied to wind turbine blade section," Journal of Renewable and Sustainable Energy, vol. 2, no. 6, 2010.
[23] V. Maldonado, M. Boucher, R. Ostman, and M. Amitay, "Active vibration control of a wind turbine blade using synthetic jets.," International Journal of Flow Control, vol. 1, no. 4, 2009.
[24] V. Maldonado, J. Farnsworth, W. Gressick, and M. Amitay, "Active control of flow separation and structural vibrations of wind turbine blades," Wind Energy: An International Journal for Progress and Applications in Wind Power Conversion Technology, vol. 13, no. 2-3, pp. 221-237, 2010.
[25] K. Taylor, C. M. Leong, and M. Amitay, "Load control on a dynamically pitching finite span wind turbine blade using synthetic jets," Wind Energy, vol. 18, no. 10, pp. 1759-1775, 2015.
[26] S. A. Tran, D. A. Corson, and O. Sahni, "Synthetic jet based active flow control of dynamic stall phenomenon on wind turbines under yaw misalignment," in 32nd ASME wind energy symposium, p. 0871, 2014.
[27] T. T. Rice, K. Taylor, and M. Amitay, "Wind tunnel quantification of dynamic stall on an s817 airfoil and its control using synthetic jet actuators," Wind Energy, vol. 22, no. 1, pp. 21-33, 2019.
[28] M. Moshfeghi and N. Hur, "Numerical study on the effects of a synthetic jet actuator on s809 airfoil aerodynamics at different flow regimes and jet flow angles," Journal of Mechanical Science and Technology, vol. 31, pp. 1233-1240, 2017.
[29] V. Maldonado and S. Gupta, "Increasing the power efficiency of rotors at transitional reynolds numbers with synthetic jet actuators," Experimental Thermal and Fluid Science, vol. 105, pp. 356-366, 2019.
[30] V. Troshin and A. Seifert, "Performance recovery of a thick turbulent airfoil using a distributed closed-loop flow control system," Experiments in fluids, vol. 54, pp. 1-19, 2013.
[31] J. Wu, M. Shen, and L. Jiang, "Role of synthetic jet control in energy harvesting capability of a semi-active flapping airfoil," Energy, vol. 208, p. 118389, 2020.
[32] P. Wang, Q. Liu, C. Li, W. Miao, M. Yue, and Z. Xu, "Investigation of the aerodynamic characteristics of horizontal axis wind turbine using an active flow control method via boundary layer suction," Renewable Energy, vol. 198, pp. 1032-1048, 2022.
[33] Y. Sun, Y. Qian, Y. Gao, T. Wang, and L. Wang, "Stall control on the wind turbine airfoil via the single and dual-channel of combining bowing and suction technique," Energy, vol. 290, p. 130224, 2024.
[34] A. Tummala, R. K. Velamati, D. K. Sinha, V. Indraja, and V. H. Krishna, "A review on small scale wind turbines," Renewable and Sustainable Energy Reviews, vol. 56, pp. 1351-1371, 2016.
[35] F. M¨uhle, J. Schottler, J. Bartl, R. Futrzynski, S. Evans, L. Bernini, P. Schito, M. Draper, A. Guggeri, E. Kleusberg, et al., "Blind test comparison on the wake behind a yawed wind turbine," Wind Energy Science, vol. 3, no. 2, pp. 883-903, 2018.
[36] M. Selig, "Low reynolds number airfoil design lecture notes," VKI Lecture Series, November, pp. 24-28, 2003.
[37] A. Ducoin, J.-C. Loiseau, and J.-C. Robinet, "Numerical investigation of the interaction between laminar to turbulent transition and the wake of an airfoil," European Journal of Mechanics-B/Fluids, vol. 57, pp. 231-248, 2016.

### DESCRIPTION OF THE INVENTION

To that end, the present invention proposes, according to one aspect, a (computer implemented) method for maximizing the power generated by a wind turbine, particularly, a Horizontal Axis Wind Turbine (HAWT). The method comprises performing by one or more processors the following steps: dividing a length of each turbine blade into different airfoils; obtaining a boundary layer separation point, a vortex shedding frequency and an amplitude of the dynamic lift and drag forces for each airfoil by analyzing the flow around each airfoil considering a wind speed, a turning speed and an angle of attack; implementing Active Flow Control (AFC) technology on each airfoil; performing, for each airfoil, wind speed and angle of attack, an AFC optimization process, through a parametric optimization or using an optimizer implementing an optimization algorithm, using the obtained boundary layer separation point and vortex shedding frequency, the AFC optimization process comprising obtaining different AFC parameters including a groove location, a groove width, a momentum coefficient, an inclination angle and a pulsating flow frequency; and integrating the different parameters along the turbine blade.

According to the invention, the AFC technology can comprise Synthetic Jets, Fluidic Oscillators, or Plasma Actuators.

In some embodiments, the AFC optimization process comprises locating the groove in the vicinity of the boundary layer separation point, and aligning the pulsating flow frequency with the vortex shedding frequency.

In some embodiments, the method also comprises establishing the groove width to be between 0.05% - 2% of an airfoil chord length and establishing the inclination angle to range between 0 - 180 degrees, measured relative to a tangent of the airfoil section at the groove location.

In case the parametric optimization is used, the method can comprise keeping two of the AFC parameters constant and optimizing the other three AFC parameters. For instance, the groove location and groove width can be maintained constant and the other three parameters can be optimized until obtaining an optimal momentum coefficient, optimal inclination angle and optimal pulsating flow frequency that maximize or minimize a desired integrated parameter of the airfoil.

In case an optimizer is used, the method can comprise defining maximum and lower values for each AFC parameter, and randomly assigning values to each AFC parameter until obtaining an optimal values combination of the AFC parameters that maximizes or minimizes a desired integrated parameter of the airfoil.

In some embodiments, the desired integrated parameter comprises an airfoil efficiency, an airfoil lift or an airfoil torque.

The optimization algorithm can be based in any optimization system/algorithms. In some embodiments, a genetic algorithm is used. In this case, the genetic algorithm provides a Pareto Front (i.e. the group of final results that maximizes or minimizes what is desired, for example, the wing efficiency, the lift, etc.

In some embodiments, the method further comprises reducing vortices generated by a tip of the turbine blade by providing a suction pump at a given location of the wind turbine; generating a constant or periodic suction of the fluid at the tip by the suction pump; and decreasing pressure at the tip until reducing the vortices up to a given threshold.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, the present invention maximizes the power generated by any wind turbine, at any wind speed. At very large wind speeds decreases the torque generated by the blades, because it promotes the boundary layer separation, and therefore allows the WT to work at higher wind speeds than the initially designed one. At very small wind speeds it allows the turbine to operate at smaller wind speeds than the minimum designed one, because it delays the boundary layer separation. All this is done via delaying the boundary layer separation along the entire blade (at small and medium wind speeds), or promoting the boundary layer separation (at large wind speeds). At small and medium wind speeds, and due to the delay of the boundary layer separation, the downstream vortical structures are drastically reduced, therefore allowing to considerably decrease the distance between two consecutive wind turbines.

Furthermore, the present invention can be directly employed for minimizing the downstream vortical structures of the wind turbines, allowing the wind turbines to be placed closer to each other, without having to consider the effect that the boundary layer separation has on the wind turbine's power output.

Moreover, the vortical structures generated by the tip of the blades at any wind speed, can be minimized or even suppressed when the AFC technology is applied in the form of constant or periodic suction.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 is a flow chart illustrating a method for maximizing the power generated by a wind turbine, particularly a HAWT, according to an embodiment of the present invention.
Fig. 2 illustrates an example of blade airfoils (sections).

### DETAILED DESCRIPTION OF THE INVENTION AND OF PREFERRED EMBODIMENTS

Present invention provides a method to maximize the power generated by any HAWT. The procedure is performed for each turbine blade and for each wind speed.

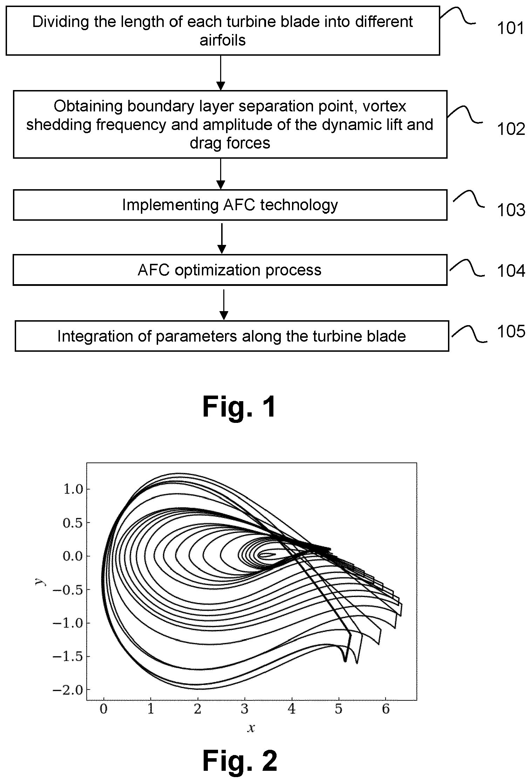

Fig. 1 shows an embodiment of the proposed method. According to this embodiment, at step 101, the entire blade length is divided in a sufficient set of different airfoils, as shown in Fig. 2. The higher the number of sections the higher the accuracy of the procedure.

At step 102, for each airfoil the following parameters are determined a) the boundary layer separation point, b) the vortex shedding frequency and c) the amplitude of the dynamic lift and drag forces by analyzing the flow around each airfoil taking into account the corresponding wind speed, turning speed and angle of attack.

At step 103, AFC technology is applied to each airfoil. Possible AFC technologies include Synthetic Jets (SJ), Fluidic Oscillators (FO), or Plasma Actuators, also known as Dielectric Barrier Discharge (DBD) actuators.

Then, at step 104, an AFC optimization process is carried out, whether parametric or using an optimizer. The AFC optimization process, for a particular airfoil, wind speed and angle of attack, uses the previously obtained boundary layer separation point and vortex shedding frequency and regardless of the AFC technology employed, it focuses on five AFC parameters (groove location, groove width, momentum coefficient, inclination angle and pulsating flow frequency). The output of this step is the optimum AFC parameters associated to each blade section and wind speed.

Finally, at step 105, the different parameters are integrated along the turbine blade. This will allow a smooth evolution of each AFC parameter along the blade in order to make sure that the boundary layer remains attached in all airfoils (sections).

In an embodiment, the AFC optimization process considers locating the groove around the boundary layer separation point, ideally, locating it precisely at this point. The pulsating flow frequency is aligned with the vortex shedding frequency.

For the rest of the AFC parameters, the groove width is established to be between 0.05% - 2% of the airfoil chord length based on the inventor's and other researchers experience. On the other hand, the inclination angle is established to range between 0 - 180 degrees, measured relative to a tangent of the airfoil section at the groove location

The momentum coefficients required greatly differ from different applications, usual values fall between 0.001 and 0.2, the tendency being of using greater momentum coefficients as the Reynolds number increases. At this point, is relevant to remember that the Reynolds number involved in the present wind turbine applications are of the order of 12000000, and there are no studies of AFC applications at these very high Reynolds numbers. Therefore to start the AFC optimization process a possible momentum coefficient is estimated and the entire range of momentum coefficients studied to obtain the optimum one for each application.

### Parametric optimization (small and medium wind speeds)

In an embodiment, the location of the groove (corresponding to the previously determined boundary layer separation point) and the groove width are kept constant throughout the process. This approach is not restrictive; other embodiments may keep different AFC parameters constant while optimizing the remaining ones.

The process begins by establishing a constant inclination angle of approximately 10 degrees and a constant pulsation flow frequency matching the previously determined vortex shedding frequency. With these four parameters (groove location, groove width, inclination angle, and pulsation flow frequency) fixed, a range of momentum coefficients is evaluated to identify the one that maximizes the airfoil efficiency.

Once the optimal momentum coefficient is determined, it is kept constant along with the groove location, groove width, and pulsation flow frequency. Next, the inclination angle is varied until the angle that maximizes airfoil efficiency is found. At this stage, with both the optimum momentum coefficient and inclination angle established, the method evaluates different pulsating flow frequencies to find the one that maximizes airfoil efficiency. The parametric optimization process can stop here, having optimized the momentum coefficient, inclination angle, and pulsating flow frequency.

It is important to note that, instead of optimizing for airfoil efficiency, the method can alternatively optimize for airfoil lift or torque, using an identical optimization process. The method could also initiate the parametric optimization process by evaluating the inclination angle first, followed by the momentum coefficient, and so on. Furthermore, the groove location and width, which were initially kept constant, could also be optimized. In other words, the parametric optimization process can begin with any parameter and can be extended to optimize all five AFC parameters instead of fixing two and optimizing the other three.

### Using an optimizer (small and medium wind speeds)

The advantage of using an optimizer resides in the fact that the entire optimization process is automatic. This means that the five AFC parameters can be automatically modified after each set of simulations (each generation). To begin, the limits of each parameter are defined, specifying the maximum and minimum values to be explored for each of the five AFC parameters. For example, the groove location can move upstream and downstream, 10% or 20% of the airfoil chord length from the estimated initial position, which is the boundary layer separation point. The range of the pulsating frequency to be evaluated falls between 0.1 and ten times the vortex shedding frequency. The boundaries of the inclination angle can be placed between one and 25 degrees versus the airfoil tangent position, the groove width estimated range can be between 0.05% and 0.3% of the airfoil chord length and finally the momentum coefficients evaluated can be between 0.001 and 0.5 for example.

Once the limits of each AFC parameter in the optimization process have been defined, the optimizer keeps changing the different parameters until obtaining the optimum values for each of the five AFC parameters, this process is long and requires a large number of computational fluid mechanics simulations.

In some embodiments, the optimization algorithm executed by the optimizer is a genetic algorithm because it's good at finding the best solutions when multiple goals are had. Moreover, it's also strong enough to handle situations where some configurations might not work due to technical issues. Nevertheless, the use of the genetic algorithm is not limitative, as any optimization algorithm could be equally used.

Once the optimization process is finished (whether parametric or using and optimizer), the resulting lift and drag dynamic peak to peak amplitudes can be compared with the ones obtained in step 102 (baseline-case). The peak to peak amplitudes of the forces obtained after the optimization process, should be much smaller than the ones obtained in the baseline-case.

### Case optimization for the maximum wind speed

The process is similar to the one previously described for small and medium wind speeds; however, in this case, the aim is not to maximize airfoil efficiency, lift, or torque. Instead, the objective is to reduce these factors to prevent damage to the rotor blades. That is, for high wind speeds, the boundary layer is separated selectively whereas for medium and low speeds it is adhered. Both parametric optimization or optimization using an optimizer can be used for this purpose.

In some embodiments, the method can also comprise reducing or minimizing the vortices generated by the blade tip. This is applicable to all HAWT, regardless of the operating wind speed. Present invention's approach to minimize or completely eliminate the blade tip vortical structures is based on generating a constant or periodic suction of the fluid at this particular location. A suction pump is placed somewhere in the HAWT generating a constant or periodic suction of the fluid at the tip. The pressure at the tip is reduced until reducing the vortices up to a given threshold.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A method for maximizing the power generated by a wind turbine, comprising:
dividing, by a processor, a length of each turbine blade into different airfoils;
obtaining, by a processor, a boundary layer separation point, a vortex shedding frequency and an amplitude of the dynamic lift and drag forces for each airfoil by analyzing the flow around each airfoil considering a wind speed, a turning speed and an angle of attack;
implementing Active Flow Control, AFC, technology on each airfoil;
performing, by a processor, for each airfoil, wind speed and angle of attack, an AFC optimization process, through a parametric optimization or using an optimizer implementing an optimization algorithm, using the obtained boundary layer separation point and vortex shedding frequency, the AFC optimization process comprising obtaining different AFC parameters including a groove location, a groove width, a momentum coefficient, an inclination angle and a pulsating flow frequency; and
integrating the different parameters along the turbine blade.

2. The method of claim 1, wherein the AFC optimization process comprises:
locating the groove in a vicinity of the boundary layer separation point; and
aligning the pulsating flow frequency with the vortex shedding frequency.

3. The method of claim 2, further comprising establishing the groove width to be between 0.05% - 2% of an airfoil chord length and establishing the inclination angle to range between 0 - 180 degrees, measured relative to a tangent of the airfoil section at the groove location.

4. The method of claim 3, wherein the parametric optimization is used, the method comprising keeping two of the AFC parameters constant and optimizing the other three AFC parameters.

5. The method of claim 4, wherein the groove location and groove width are maintained constant and the other three parameters are optimized until obtaining an optimal momentum coefficient, optimal inclination angle and optimal pulsating flow frequency that maximize or minimize a desired integrated parameter of the airfoil.

6. The method of claim 3, wherein an optimizer is used, the method comprising:
defining maximum and lower values for each AFC parameter; and
randomly assigning values to each AFC parameter until obtaining an optimal values combination of the AFC parameters that maximizes or minimizes a desired integrated parameter of the airfoil.

7. The method of claim 6, wherein the desired integrated parameter comprises an airfoil efficiency, an airfoil lift or an airfoil torque.

8. The method of any one of the previous claims, wherein the optimization algorithm comprises a genetic algorithm.

9. The method of claim 8, wherein the genetic algorithm comprises obtaining a Pareto Front.

10. The method of any one of the previous claims, further comprising reducing vortices generated by a tip of the turbine blade by:
providing a suction pump at a given location of the wind turbine;
generating a constant or periodic suction of the fluid at the tip by the suction pump; and
decreasing pressure at the tip until reducing the vortices up to a given threshold.

11. The method of any one of the previous claims, wherein the AFC technology comprises Synthetic Jets, Fluidic Oscillators, or Plasma Actuators.

12. The method of any one of the previous claims, wherein the wind turbine comprises a Horizontal Axis Wind Turbine, HAWT.

13. A non-transitory computer readable medium comprising executable instructions that, when executed by one or more processors of a computer system cause the computer system to perform the method of any one of the preceding claims 1 to 12.
